# EUROPÄISCHE PATENTSCHRIFT

(11) **EP 2 258 515 B1**
(45) Veröffentlichungstag und Bekanntmachung des Hinweises auf die Patenterteilung: **20.06.2012**
(21) Anmeldenummer: 10163756.9
(22) Anmeldetag: 25.05.2010
(51) Int. Cl.: B23Q 39/02

(54) **Schienengeführtes Werkzeuggerät**
Rail-guided tool device
Machine-outil sur rails

(30) Priorität: 02.06.2009 DE 102009026637
(43) Veröffentlichungstag der Anmeldung: 08.12.2010
(73) Patentinhaber: HILTI Aktiengesellschaft, 9494 Schaan (LI)
(72) Erfinder: Werder, Bruno, 9487 Gamprin (LI); Selb, Michael, 6800 Feldkirch (AT); Schittl, Josef, 6712 Thüringen (AT)

(56) Entgegenhaltungen:
- WO-A2-96/22865
- DE-B3-102004 014 837
- US-A- 3 552 805
- US-A1- 2004 175 247
- US-A1- 2007 163 412

## Beschreibung

Die vorliegende Erfindung betrifft ein schienengeführtes Werkzeuggerät gemäß dem Oberbegriff des Patentanspruchs 1.

Wandsägen sind Sägegeräte zum Durchtrennen von armierten oder nicht-armierten Wänden, Decken und Böden aus Beton oder ähnlichem Untergrund mit Hilfe von rotierenden, mit Schneidsegmenten bestückten Sägeblättern. Sie werden im Hoch- und Tiefbau, bei Sanierungen und Renovierungen eingesetzt. Beispielsweise kann es bei Abbruch- oder Umbauarbeiten erforderlich sein, bereits bestehende Betonwände zu durchtrennen, abzutragen oder Bereiche aus den Betonwänden auszuschneiden.

Die WO 96/022865 A offenbart ein als Wandsäge ausgebildetes schienengeführtes Werkzeuggerät mit einem Traggriff und einem auf einem Führungsschlitten angeordneten Gerätekopf. Der Führungsschlitten ist mittels einer Verstelleinrichtung zwischen einer Verriegelungsposition, in der der Führungsschlitten über zumindest eine verstellbare Führungsrolle mit einer Führungsschiene in Eingriff steht, und einer Löseposition, in der die zumindest eine verstellbare Führungsrolle von der Führungsschiene beabstandet ist, bewegbar. Der Traggriff ist mit der Verstelleinrichtung gekoppelt und durch eine Translationsbewegung des Handgriffs werden die Führungsrollen auf die Führungsschiene zugeschwenkt bzw. von der Führungsschiene weggeschwenkt. Nachteilig ist, dass die Wandsäge keine Entriegelungseinrichtung aufweist, die ein unbeabsichtigtes Betätigen der Verstelleinrichtung in der Verriegelungsposition verhindert oder zumindest erschwert.

Die EP 1 579 968 B1 offenbart ein schienengeführtes Werkzeuggerät, bspw. ein Säge-, Schlitz- oder Bohrgerät, mit einem auf einem Führungsschlitten angeordneten Gerätekopf und einem Traggriff. Der Führungsschlitten steht über Führungsrollen mit einer Führungsschiene in Eingriff, wobei die Führungsrollen mittels einer Verstelleinrichtung am Traggriff zwischen einer Verriegelungsposition und einer Löseposition überführbar sind. Der Traggriff ist mit einem Übertragungselement der Verstelleinrichtung drehfest verbunden und um eine Achse drehbar ausgebildet. Der Traggriff weist eine Entriegelungseinrichtung auf, die ein unbeabsichtigtes Betätigen der Verstelleinrichtung in der Verriegelungsposition verhindert. Die Entriegelungseinrichtung umfasst ein um eine Achse des Traggriffs drehbares Betätigungsmittel, ein Übertragungsmittel und ein Entriegelungsmittel. Die Drehbewegung des Betätigungsmittels ist über das Übertragungsmittel auf das Entriegelungsmittel übertragbar.

Nachteilig ist, dass die Entriegelungseinrichtung aus einer Vielzahl an Teilen aufgebaut ist. Außerdem lässt sich das Betätigungsmittel der Entriegelungseinrichtung nur schwer mit dem Daumen betätigen, wenn der Traggriff umfasst wird.

Die Aufgabe der vorliegenden Erfindung besteht demgegenüber darin, die Entriegelung des Führungsschlittens zu vereinfachen. Außerdem soll die Entriegelungseinrichtung leicht zu bedienen sein, auch wenn der Bediener den Traggriff fest umfasst.

Diese Aufgabe wird bei dem eingangs genannten schienengeführten Werkzeuggerät erfindungsgemäß durch die Merkmale des unabhängigen Anspruchs gelöst.

Das schienengeführte Werkzeuggerät weist zumindest einen Traggriff und einen auf einem Führungsschlitten angeordneten Gerätekopf auf. Der Führungsschlitten ist mittels einer Verstelleinrichtung zwischen einer Verriegelungsposition, in der der Führungsschlitten über zumindest eine verstellbare Führungsrolle mit einer Führungsschiene in Eingriff steht, und einer Löseposition, in der die zumindest eine verstellbare Führungsrolle von der Führungsschiene beabstandet ist, bewegbar. Das Werkzeuggerät weist außerdem eine Entriegelungseinrichtung zum Entriegeln der Verstelleinrichtung in der Verriegelungsposition auf, wobei die Entriegelungseinrichtung ein Betätigungsmittel, ein Übertragungsmittel und ein Entriegelungsmittel aufweist. Kennzeichnend ist, dass das Betätigungsmittel, das Übertragungsmittel und das Entriegelungsmittel einteitig als Blechteil ausgebildet sind, dass das Entriegelungsmittel als Schieber ausgebildet ist und dass das Entriegelungsmittel in der Verriegelungsposition mit einer Ausnehmung in dem Übertragungselement, in form einer kulisse, zusammenwirkt.

Bei der einteiligen Ausbildung der Entriegelungseinrichtung mit Betätigungsmittel, Übertragungsmittel und Entriegelungsmittel ist die Anzahl der benötigten Teile reduziert. Dies reduziert einerseits die Kosten für die Entriegelungseinrichtung und andererseits ist die Entriegelungseinrichtung robuster und weniger fehleranfällig.

Die Entriegelungseinrichtung als Blechteil ausgebildet. Ein Blechteil bietet den Vorteil, dass es einfach und kostengünstig herstellbar ist. Außerdem ist es robust und leicht auszutauschen.

Gemäß einem weiteren Aspekt ist das Betätigungsmittel der Entriegelungseinrichtung in der Verriegelungsposition mittels eines Federelementes vorgespannt. Dabei ist das Federelement besonders bevorzugt in die einteilige Entriegelungseinrichtung integriert. Beim Entriegeln muss zunächst die Vorspannung des Federelementes überwunden werden, bevor das Betätigungsmittel bewegt wird, so dass die Gefahr eines unbeabsichtigten Entriegelns reduziert ist.

Gemäß einem weiteren Aspekt ist die zumindest eine verstellbare Führungsrolle in der Verriegelungsposition so angeordnet, dass die Totpunktlage überschritten ist. Die Selbsthemmung in der Verriegelungsposition verhindert, dass sich der Führungsschlitten unbeabsichtigt durch die Bearbeitungskräfte von der Führungsschiene löst.

In einer bevorzugten Ausführungsform weist die Verstelleinrichtung eine Schubstange auf, die über ein Kopplungselement mit dem Traggriff gekoppelt ist. Dabei weist die Schubstange besonders bevorzugt mindestens ein Führungselement auf, das mit der zumindest einen verstellbaren Führungsrolle gekoppelt ist.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Seitenansicht einer erfindungsgemäßen, am Boden befestigten, schie- nengeführten Wandsäge;
- Fig. 2: einen Schnitt durch einen erfindungsgemäßen Führungsschlitten mit einem Traggriff und einer Verstelleinrichtung;
- Fign. 3a,b: einen Ausschnitt des Führungsschlittens von Fig. 2 mit der Verstelleinrichtung (Fig. 3a) und einer im Traggriff angeordneten Entriegelungseinrichtung (Fig. 3b); und
- Fign. 4a,b: die Verstell- und Entriegelungseinrichtungen des Führungsschlittens von Fig. 2 in einer Ansicht von oben in einer Verriegelungsposition (Fig. 4a) und einer Löseposition (Fig. 4b).

Gleiche oder funktionsgleiche Elemente werden durch gleiche Bezugszeichen in den Figuren indiziert, soweit nicht anders angegeben.

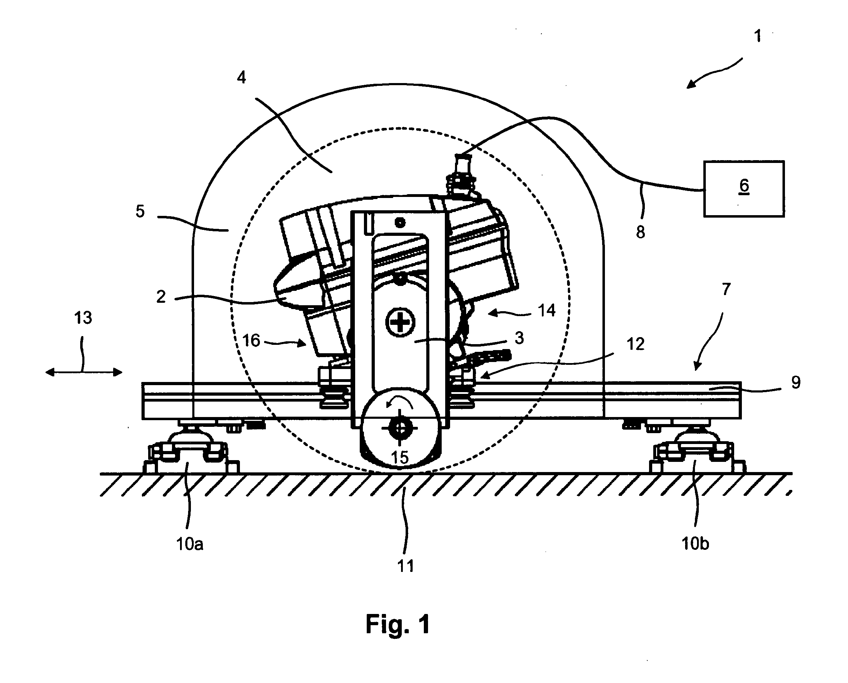

Das in **Fig. 1** gezeigte erfindungsgemäße schienengeführte Werkzeuggerät 1 ist als Wandsäge ausgebildet. Die Wandsäge 1 umfasst einen Sägekopf **2,** einen Sägearm **3** mit einem Sägeblatt **4** und einem Sägeblattschutz **5**, eine Bedieneinrichtung **6** und eine Befestigungsvorrichtung **7** zur Befestigung der Wandsäge 1. Die Bedienung der Wandsäge 1 erfolgt über die Bedieneinrichtung 6, die über eine Versorgungsleitung **8** mit dem Sägekopf 2 verbunden ist. Die Wandsäge 1 ist mit der Befestigungsvorrichtung 7 bestehend aus einer Führungsschiene **9** und Schienenfüßen **10a**, **10b** am Boden **11** befestigt.

Der Sägekopf 2 ist über einen Führungsschlitten **12** auf der Führungsschiene 9 in Richtung einer Achse **13** längsverschiebbar angeordnet. Der Sägekopf 2 umfasst eine erste Antriebseinrichtung **14** zur Rotation des Sägeblatts 4 um eine Drehachse **15** und eine zweite Antriebseinrichtung **16** zur Vorschubsteuerung des Führungsschlittens **12** entlang der Führungsschiene 9 in Richtung der Achse 13. Alternativ können die Antriebseinrichtungen zur Rotation des Sägeblattes 4 und zur Vorschubsteuerung des Führungsschlittens 12 als gemeinsame Antriebseinrichtung ausgebildet sein.

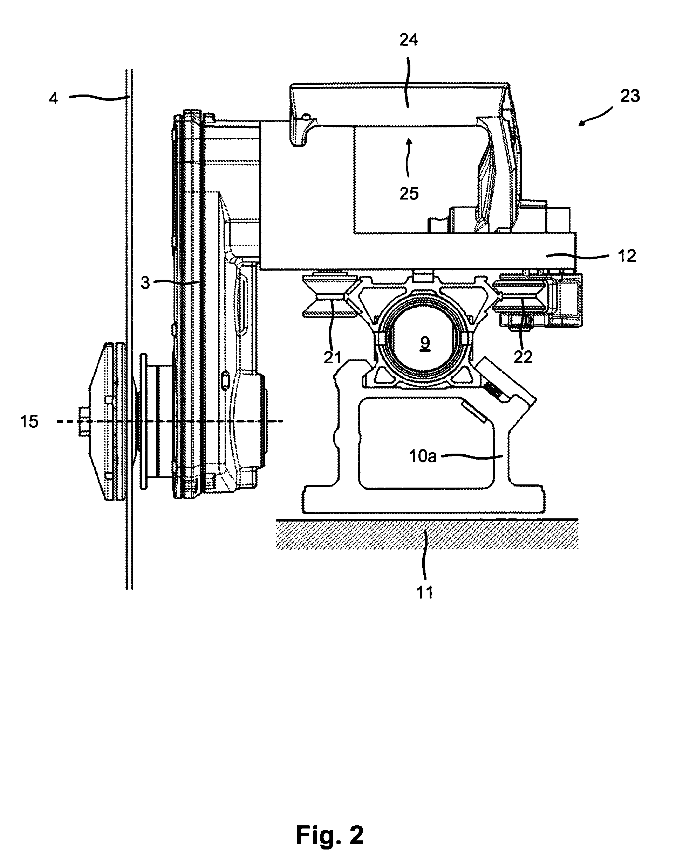

**Fig. 2** zeigt einen Schnitt durch den Führungsschlitten 12, der durch zwei starre Führungsrollen **21** und zwei verstellbare Führungsrollen **22,** von denen in Fig. 2 nur jeweils eine dargestellt ist, mit der Führungsschiene 9 in Eingriff steht. Die verstellbaren Führungsrollen 22 sind mittels einer Verstelleinrichtung **23** aus einer Verriegelungsposition in eine Löseposition bewegbar. In der Verriegelungsposition stehen sowohl die starren Führungsrollen 21 als auch die verstellbaren Führungsrollen 22 in Eingriff mit der Führungsschiene 9. In der Löseposition sind zumindest die verstellbaren Führungsrollen 22 von der Führungsschiene 9 beabstandet und die Wandsäge 1 kann von der Führungsschiene 9 entfernt bzw. beim Aufbau auf der Führungsschiene 9 angeordnet werden.

Der Führungsschlitten 12 weist einen Traggriff **24** auf. Die Verstelleinrichtung 23 wird über den Traggriff 24 betätigt. Der Traggriff 24 weist eine Entriegelungseinrichtung **25** auf, die ein unbeabsichtigtes Betätigen der Verstelleinrichtung 23 in der Verriegelungsposition verhindert.

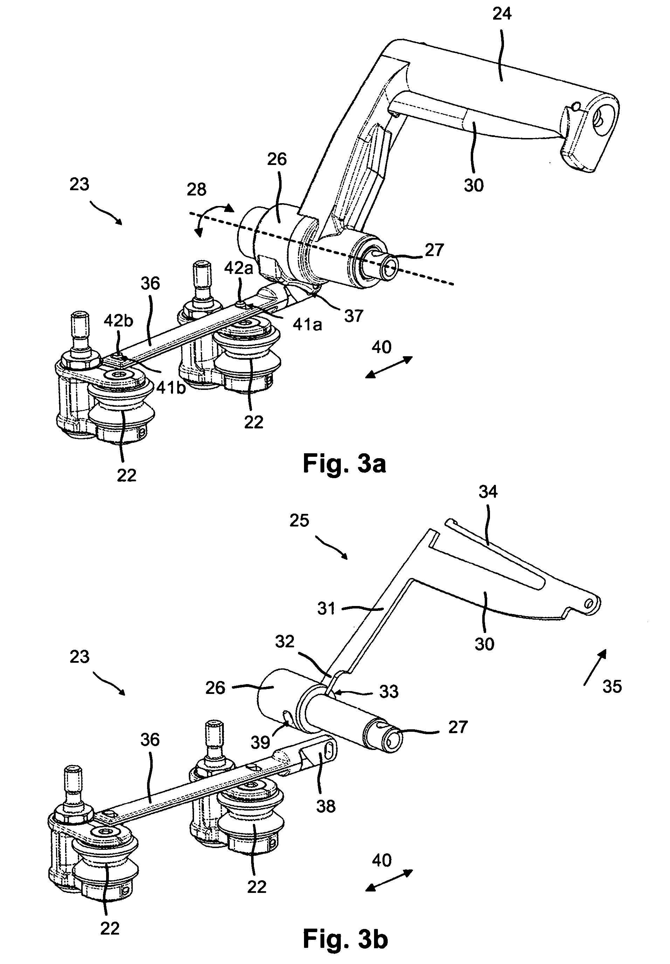

**Fign. 3a,b** zeigen den Traggriff 24 des Führungsschlittens 12 mit der Verstelleinrichtung 23 und der im Traggriff 24 angeordneten Entriegelungseinrichtung 25.

Fig. 3a zeigt den Traggriff 24, der drehfest mit einem Übertragungselement **26** in Form einer Kulisse gekoppelt ist. Die Kulisse 26 ist auf einer Achse **27** angeordnet und um die Achse 27 in Richtung des Pfeils **28** drehbar ausgebildet.

Fig. 3b zeigt die im Inneren des Traggriffs 24 angeordnete Entriegelungseinrichtung 25. Die Entriegelungseinrichtung 25 umfasst ein Betätigungsmittel **30,** ein Übertragungsmittel **31** und ein Entriegelungsmittel **32.** Eine Bewegung des Betätigungsmittels 30 wird über das Übertragungsmittel 31 auf das Entriegelungsmittel 32 übertragen. Das Entriegelungsmittel 32 ist als Schieber ausgebildet, welcher mit einer Ausnehmung **33** in der Kulisse 26 zusammenwirkt. Die Entriegelungseinrichtung 25 ist einteilig als Blechteil ausgebildet. Bei der einteiligen Ausbildung der Entriegelungseinrichtung mit Betätigungsmittel, Übertragungsmittel und Entriegelungsmittel ist die Anzahl der benötigten Teile reduziert. Ein einteiliges Blechteil ist einfach und kostengünstig herstellbar und außerdem ist das Blechteil robust und nicht fehleranfällig.

Das Betätigungsmittel 30 ist beim Umgreifen des Traggriffs 24 mit der Hand einfach bedienbar, so dass eine sichere Handhabung gewährleistet ist. Das Betätigungsmittel 30 kann betätigt werden, während die Finger den Traggriff 24 sicher umgreifen. Um ein unbeabsichtigtes Entriegeln des Traggriffs 24 zu erschweren, weist die im Traggriff 24 angeordnete Entriegelungseinrichtung 25 ein Federelement **34** auf. Beim Entriegeln muss zunächst die Vorspannung des Federelementes 34 überwunden werden, bevor das Betätigungsmittel 30 bewegt wird.

Zum Entriegeln des Traggriffs 24 muss das Betätigungsmittel 30 soweit in Richtung **35** gezogen werden, dass das Entriegelungsmittel 32 aus der Ausnehmung 33 heraus gleiten kann und die Verriegelung des Traggriffs 24 aufgehoben ist. Nach dem Entriegeln kann der Traggriff 24 um die Achse 27 in Richtung 28 gedreht werden. Alternativ kann die Entriegelungseinrichtung 25 auch derart ausgebildet sein, dass das Betätigungsmittel 30 durch Druck und nicht durch Zug bewegt wird.

Die Verstelleinrichtung 23 umfasst eine Schubstange **36,** die über ein Kopplungselement **37** mit der Kulisse 26 gekoppelt ist. Das Kopplungselement 37 besteht aus einem Führungselement **38,** das in eine schlitzförmige Ausnehmung **39** in der Kulisse 26 eingreift. Eine Drehbewegung des Traggriffs 24 um die Achse 27 wird über die Kulisse 26 in eine Bewegung der Schubstange 36 in Richtung der Achse **40** übertragen.

Die Schubstange 36 ist mit den verstellbaren Führungsrollen 22 gekoppelt und umfasst zwei als Langlöcher ausgebildete Führungselemente **41a, 41b,** die mit einem Stift **42a, 42b** der verstellbaren Führungsrollen 22 zusammenwirken.

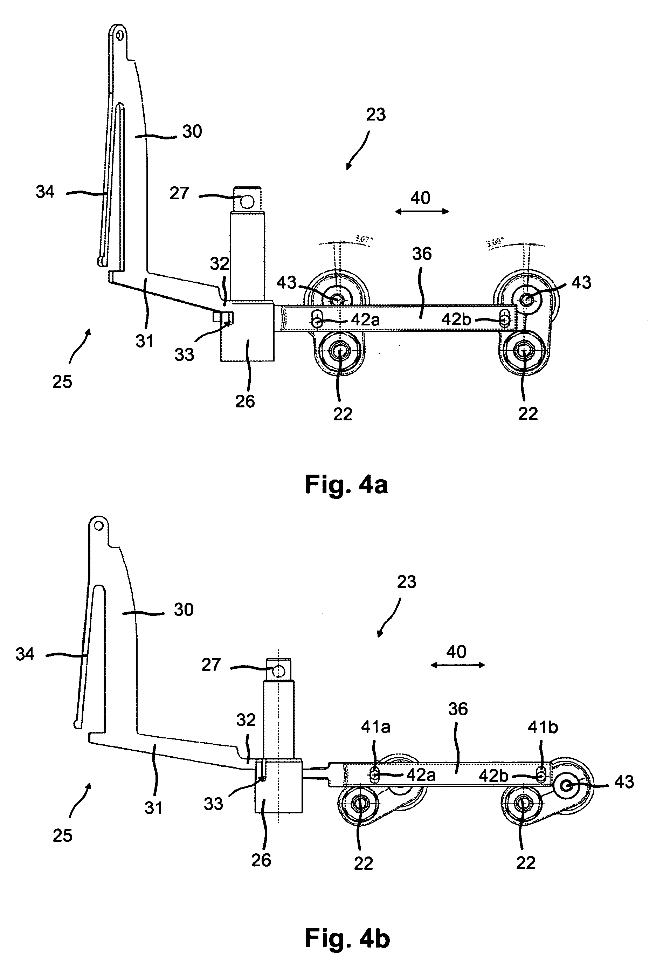

**Fign. 4a,b** zeigen die Verstell- und Entriegelungseinrichtungen 23, 25 des Führungsschlittens von Fig. 2 in einer Ansicht von oben, wobei in Fig. 4a die Verstelleinrichtung 23 in der Verriegelungsposition und in Fig. 4b in der Löseposition angeordnet sind.

Die Bewegung der Schubstange 36 in Richtung 40 wird in eine Schwenkbewegung der verstellbaren Führungsrollen 22 um zueinander parallele Drehachsen übertragen. Die verstellbaren Führungsrollen 22 werden aus der Verriegelungsposition, in der die verstellbaren Führungsrollen 22 in Eingriff mit der Führungsschiene 9 stehen (Fig. 4a), in die Löseposition, in der die verstellbaren Führungsrollen 22 von der Führungsschiene 9 beabstandet sind (Fig. 4b), bewegt.

Die verstellbaren Führungsrollen 22 sind in der Verriegelungsposition so angeordnet, dass die Totpunktlage um ein bestimmtes Maß überschritten ist. Durch das Überschreiten der Totpunktlage ist eine sichere Befestigung des Führungsschlittens 12 und damit der Wandsäge 1 auf der Führungsschiene 9 gewährleistet. Das Überschreiten der Totpunktlage wird als Selbsthemmung oder Selbsthaltung bezeichnet.

Die verstellbaren Führungsrollen 22 weisen eine Einstelleinrichtung **43** zur Einstellung des Spieles zwischen der Führungsrolle 22 und der Führungsschiene 9 in der Verriegelungsposition in Form eines Exzenters auf. Mit Hilfe der Einstelleinrichtung 43 wird das Spiel der verstellbaren Führungsrollen 22 so eingestellt, dass der Führungsschlitten 12 spielfrei auf der Führungsschiene 9 angeordnet ist, ohne zu klemmen.

## Patentansprüche

1. Schienengeführtes Werkzeuggerät (1) mit einem auf einem Führungsschlitten (12) angeordneten Gerätekopf (2), wobei der Führungsschlitten (12) mittels einer Verstelleinrichtung (23) zwischen einer Verriegelungsposition, in der der Führungsschlitten (12) über zumindest eine verstellbare Führungsrolle (22) mit einer Führungsschiene (9) in Eingriff steht, und einer Löseposition, in der die zumindest eine verstellbare Führungsrolle (22) von der Führungsschiene (9) beabstandet ist, bewegbar ist, mit zumindest einem Traggriff (24), der mit einem Übertragungselement (26) der Verstelleinrichtung (23) drehfest verbunden und um eine Achse (27) drehbar ausgebildet ist, und mit einer Entriegelungseinrichtung (25) zum Entriegeln der Verstelleinrichtung (23) in der Verriegelungsposition, wobei die Entriegelungseinrichtung (25) ein Betätigungsmittel (30), ein Übertragungsmittel (31) und ein Entriegelungsmittel (32) aufweist, **dadurch gekennzeichnet, dass**
das Übertragungselement in form einer Kulisse (26) ausgeführt ist, das Betätigungsmittel (30), das Übertragungsmittel (31) und das Entriegelungsmittel (32) einteilig als Blechteil ausgebildet sind, das Entriegelungsmittel (32) als Schieber ausgebildet ist und das Entriegelungsmittel (32) in der Verriegelungsposition mit einer Ausnehmung (33) in der Kulisse (26) zusammenwirkt.

2. Werkzeuggerät nach einem der vorhergehenden Ansprüche, **dadurch gekennzeichnet, dass** das Betätigungsmittel (30) in der Verriegelungsposition mittels eines Federelementes (34) vorgespannt ist.

3. Werkzeuggerät nach Anspruch 2, **dadurch gekennzeichnet, dass** das Federelement (34) in die einteilige Entriegelungseinrichtung (25) integriert ist.

4. Werkzeuggerät nach einem der vorhergehenden Ansprüche, **dadurch gekennzeichnet, dass** die zumindest eine verstellbare Führungsrolle (22) in der Verriegelungsposition so angeordnet ist, dass die Totpunktlage überschritten ist.

5. Werkzeuggerät nach einem der vorhergehenden Ansprüche, **dadurch gekennzeichnet, dass** die Verstelleinrichtung (23) eine Schubstange (36) aufweist, die über ein Kopplungselement (37) mit dem Traggriff (24) gekoppelt ist.

6. Werkzeuggerät nach Anspruch 5, **dadurch gekennzeichnet, dass** die Schubstange (36) mindestens ein Führungselement (41 a, 41 b) aufweist, das mit der zumindest einen verstellbaren Führungsrolle (22) gekoppelt ist.

## Claims

1. Rail-guided tool appliance (1) with an appliance head (2) arranged on a guide carriage (12), wherein the guide carriage (12) is movable by means of a shift device (23) between a locking position in which the guide carriage (12) is in engagement with a guide rail (9) via at least one shiftable guide roller (22) and a release position in which the at least one shiftable guide roller (22) is clear of the guide rail (9), with at least one handle (24) which is connected fixedly in rotation to a transmission element (26) of the shift device (23) and is rotatable about an axle (27), and with an unlocking device (25) for unlocking the shift device (23) in the locking position, the unlocking device (25) having an operating means (30), a transmission means (31) and an unlocking means (32),
**characterized in that**
the transmission element is constructed in the form of a crank (26), the operating means (30), transmission means (31) and unlocking means (32) are made in one piece as a sheet-metal part, the unlocking means (32) is configured as a slide, and the unlocking means (32) cooperates with a notch (33) in the crank in the locking position.

2. Tool appliance according to any one of the preceding claims [sic], **characterized in that** the operating means (30) is biased by means of a spring element (34) in the locking position.

3. Tool appliance according to Claim 2, **characterized in that** the spring element (34) is integral with the one-piece unlocking device (25).

4. Tool appliance according to any one of the preceding claims, **characterized in that** the at least one shiftable guide roller (22) is arranged so that the dead point position is passed in the locking position.

5. Tool appliance according to any one of the preceding claims, **characterized in that** the shift device (23) has a push rod (36) which is coupled with the handle (24) by a coupling element (37).

6. Tool appliance according to Claim 5, **characterized in that** the push rod (36) has at least one guide element (41 a, 41b) which is coupled with the at least one shiftable guide roller (22).

## Revendications

1. Outil guidé par des rails (1) comportant une tête d'outil (2) agencée sur un chariot de guidage (12), le chariot de guidage (12) pouvant être déplacé au moyen d'un dispositif de réglage (23) entre une position verrouillée, dans laquelle le chariot de guidage (12) est en prise avec un rail de guidage (9) par l'intermédiaire d'au moins un galet de guidage réglable (22), et une position libérée, dans laquelle le au moins un galet de guidage réglable (22) est espacé du rail de guidage (9), comportant au moins une poignée de transport (24) reliée à un élément de transmission (26) du dispositif de réglage (23) de manière bloquée en rotation et configuré de manière à pouvoir tourner autour d'un axe (27), et un dispositif de déverrouillage (25) pour déverrouiller le dispositif de réglage (23) dans la position verrouillée, le dispositif de déverrouillage (25) comportant des moyens d'actionnement (30), des moyens de transmission (31) et des moyens de déverrouillage (32),
**caractérisé en ce que**
l'élément de transmission est réalisé sous la forme d'une coulisse (26), les moyens d'actionnement (30), les moyens de transmission (31) et les moyens de déverrouillage (32) sont conçus d'un seul tenant sous la forme d'une pièce en tôle, les moyens de déverrouillage (32) sont conçus sous la forme d'un coulisseau et les moyens de déverrouillage (32) dans la position verrouillée coopèrent avec un évidement (33) dans la coulisse.

2. Outil selon l'une quelconque des revendications précédentes, **caractérisé en ce que** les moyens d'actionnement (30) sont préchargés dans la position verrouillée au moyen d'un élément à ressort (34).

3. Outil selon la revendication 2, **caractérisé en ce que** l'élément à ressort (34) est intégré dans le dispositif de déverrouillage monobloc (25).

4. Outil selon l'une quelconque des revendications précédentes, **caractérisé en ce que** le au moins un galet de guidage réglable (22) dans la position verrouillée est agencé de telle sorte que la position au point mort est franchie.

5. Outil selon l'une quelconque des revendications précédentes, **caractérisé en ce que** le dispositif de réglage (23) comporte une bielle (36) qui est couplée à la poignée de transport (24) par l'intermédiaire d'un élément de couplage (37).

6. Outil selon la revendication 5, **caractérisé en ce que** la bielle (36) comporte au moins un élément de guidage (41a, 41b) qui est couplé au au moins un galet de guidage réglable (22).
